# EUROPÄISCHE PATENTSCHRIFT

(11) **EP 2 944 192 B1**
(45) Veröffentlichungstag und Bekanntmachung des Hinweises auf die Patenterteilung: **28.02.2018**
(21) Anmeldenummer: 14004114.6
(22) Anmeldetag: 05.12.2014
(51) Int. Cl.: A01M 29/08

(54) **Wildtierwarneinrichtung**
Wild animal warning device
Dispositif d'avertissement contre les animaux sauvages

(30) Priorität: 17.05.2014 DE 102014007299
(43) Veröffentlichungstag der Anmeldung: 18.11.2015
(73) Patentinhaber: Motzener Kunststoff- und Gummiverarbeitung GmbH, 15749 Mittenwalde OT Motzen (DE)
(72) Erfinder: Detlef, Roggan, D 15746 Groß Köris OT Klein Köris (DE)
(74) Vertreter: Seltmann, Reinhard

(56) Entgegenhaltungen:
- DE-A1- 2 642 958
- DE-A1- 2 720 077
- DE-B1- 2 753 029
- DE-U1-202011 108 278
- US-A- 3 458 245
- US-A- 4 189 209

## Beschreibung

Die Erfindung betrifft eine Wildtierwarneinrichtung, bei der von einem beleuchteten sich bewegenden Fahrzeug Lichtstrahlen in der vermuteten Richtung kommender Wildtiere gelenkt werden und das Umlenken dieser Lichtstrahlen über spiegelnde Einrichtungen im Sinne von auf einem Grundkörper befindlichen Reflektoren erfolgt sowie der Grundkörper Befestigungspunkte zu seiner Befestigung an bekannten ihn tragenden Elementen wie Straßenbegrenzungspfählen und dergleichen besitzt und bei der von einem beleuchteten Fahrzeug ausgehende Lichtstrahlen in der vermuteten Richtung kommender Wildtiere und diese abschreckend gelenkt werden. Derartige Einrichtungen sind für die Erhöhung der Sicherheit an Straßen und Eisenbahnstrecken sowie an Rollbahnen von Flugplätzen von großer Bedeutung.

Nach DE 20 2009 017 301 U1 wird entlang einer vorgegeben Strecke ein "Schallwellenzaun" errichtet. Nach DE 10 2007 025 274 A1 wird Wild beschallt, es werden Gerüche ausgestrahlt und Blinksignale eingesetzt. Töne und Licht verändern sich ständig in Stärke, Länge und Art. Bei DE 10 2004 018 290 A1 werden über Sensoren durch ein Fahrzeug Abschreckungslaute und das Wild störende seismische Schwingungen ausgelöst. In DE 299 03 064 U1 ist ein Leitpfosten mit integrierten Verkehrswarnfunktionen beschrieben. Als Energiequelle für die Stromversorgung dient ein Solarmodul, das Einschalten der Anlage erfolgt über das Mobilfunknetz oder beauftragte befugte Personen. Das Wildwarnen wird durch Dämmerungs- und Bewegungsmelder aktiviert. Optische Signalgeber sind Blinkleuchten, akustische Signalgeber sind vorzugsweise Summer. Bei DE 201 03 693 U1 wird blinkendes Rotlicht in Verbindung mit einem akustischem Geräusch eingesetzt. Gleichzeitig ist ein solargespeister Sender vorhanden, der bei Annäherung von Wild ein Signal ans vorüberfahrende Auto übermittelt. DE 20 2008 002 619 U1 beschreibt ein Konstrukt, bei dem ins Innere eines Begrenzungspfahles Funksender, Akku und Laser-Sender sowie Laser-Empfänger integriert sind.

Diese Lösungen sind beispielhaft erwähnt. Ihre Realisierung bedingt einen erheblichen Technik-Einsatz, der aufwändig und damit teuer ist, und das fertige anwendungsreife Erzeugnis bedarf einer ständigen Kontrolle, Pflege und Wartung.

Bei CH 626 130A sind in einem Winkel zueinander angeordnete Reflektoren vorhanden, die aus Spiegeln bestehen, deren Rückseiten verspiegelt sind und deren Frontflächen eben oder gewölbt sind.

Nach AT 385 132B werden auftreffende und von Fahrzeugen verursachte Lichtstrahlen im Winkel von 45° durch Reflektoren in die vermutete Richtung der Annäherung des Wildes abgelenkt. Nach AT 317 729B wird die Wirksamkeit der Reflektoren erhöht, indem diese im Inneren geriffelt in Form einer Prismenplatte ausgeführt sind.

Bei CH 458 143A besteht eine Wildwarneinrichtung aus einem Hohlkörper, dessen senkrecht angeordnetes Mittelteil den Querschnitt einer gleichschenklig-rechtwinkligen Pyramide darstellt. Auf den Stirnflächen des Mittelteils sind pyramidenartige Körper ausgebildet sind. Die Oberflächen der erwähnten geometrischen Körper sind verspiegelt.

Nach DE 20 2014 000 296 U1 ist auf Straßenbegrenzungspfählen ein um eine senkrechte Achse rotierender Wildwarnreflektor vorhanden, der aus einem um eine mittig angeordnete senkrechte Achse s-förmig (langgestreckte Halbschalen) gebogen durch den Windeinfluss rotiert. Beide äußere Flächen sind mit Reflektoren besetzt. Die Vorzugsversion sieht vor, diese auf einer Seite in einer blauen Einfärbung, auf der anderen in einer roten Einfärbung auszuführen.

In DE 20 2011 108 278 U1 weist ein Straßenbegrenzungspfosten auf der der Straße abgewandten Seite einen Reflexionsspiegel auf, der einteilig eine innere Struktur aufweisend einteilig aus Kunststoff mit einer in einer abgeflachten Halbkreisform um eine Achse konvex gekrümmte Außenfläche ausgebildet ist und die Achse parallel zur Längsachse des Begrenzungspfahles angeordnet ist. Die innere Struktur ist auf der Rückseite reflektierend ausgebildet. Dieser Effekt wird insbesondere durch aufgedampftes Aluminium erreicht. Die erreichte innere Struktur bewirke horizontale und vertikale Reflexionen.
Bei DE 299 15 731 U1 wird in einem Behälter mit seitlicher Öffnung ein Duftstoffträger untergebracht.

Nach DE 295 20 772 U1 weisen optische, das Wild abschreckende Einrichtungen das Licht sammelnde und/oder zerstreuende gekrümmte Spiegelflächen auf. Es ist mindestens eine ebene Spiegelfläche sowie Sammel- und/oder Zerstreuungslinsen vorhanden, die auch prismatischen Querschnitt haben können. Als optische Einrichtungen können auch Lichtleitfasern verwendet sein.
DE 20 2010 011 739 U1 beschreibt ein Zusatzgerät für Baustellenleuchten. Das Grundgerät wird durch elektronische Bauteile zur Wilderkennung und Steuerung des Lichts zur Alarmierung der Autofahrer ergänzt.
Der Vollständigkeit halber sei noch auf sogenannte Wildpfeifen verwiesen, wie eine derartige in DE 20 2006 007 082 U1 beschrieben ist sowie Handgeräte, wie in DE 20 2006 007 082 U1 dargestellt.

Allen dargestellten Konzeptionen ist gemeinsam, dass sie ungenügend das Wild warnen oder sogar auf eine Warnung des Fahrzeugführers abstellen und/oder sein aktives Eingreifen notwendig machen, um das Wild zu warnen oder auf dessen zu vermutende Reaktion zu reagieren.
Bekannt ist des weiteren, dass Wildtiere auf Blau-, Rot- und Grüntöne empfindlich reagieren (Burgenländischer Landesjagdverband, Johann-Permayer-Straße 2a, A 7000 Eisenstadt; Infoblatt 2006, Seiten 12 und 13; Beitrag "Können Wildtiere Farben sehen").
Aufgabe der Erfindung ist es, unabhängig vom Willen des Fahrers eines mobilen Fahrzeuges Wildtiere besser zu warnen, indem die Beleuchtung des sich in der Dunkelheit bewegenden Fahrzeuges benutzt wird, um solche wechselnden Lichteffekte zu erzeugen, dass Wildtiere, die in einem ungeeigneten Augenblick beabsichtigen, die Fahrbahn zu überqueren, vom Licht des sich nähernden Fahrzeuges hinreichend davor gewarnt werden, die Straße zeitgleich zu passieren.
Die Aufgabe wird gelöst durch eine Wildtierwarneinrichtung gemäß Patentanspruch 1. Es ist allgemein bekannt, dass sich Wildtiere bei bestimmten Farben, die von den Sehrezeptoren der Wildtiere als grell bis sehr grell empfunden werden, abwehrend verhalten. Im konkreten Fall stocken Wildtiere in ihrem Bewegungsdrang und verharren, bis das störend empfundene Licht verloschen ist. Als von Wildtieren als grell bis sehr grell empfundene Farben gelten nach bisherigen Erkenntnissen die Farben blau, türkis, gelb und grün sowie sich aus Mischungen dieser Farbtöne ergebende Nuancen.
Die vieleckförmigen vorzugsweise bienenwabenförmigen Prägungen sind regelmäßig in nur einer dem wahrnehmbaren Farbspektrum der Wildtiere zuzuordnenden Farbe ausgeführt, jedoch ist die Vielzahl einzelner einen Reflektor ergebenden vieleckförmigen Prägungen mit unterschiedlichen Farben des von Wildtieren wahrnehmbaren Farbspektrums belegt sein. Da der Lichteinfall sich bei einem in Bewegung befindlichen Fahrzeug ständig verändert, führt das bei dem gespiegelten Licht für ständige nicht voraussehbare und/oder nicht vorbestimmbare sich im Allgemeinen sich nicht wiederholende und immer wieder neue andere Farbwechsel und Unterbrechungen der reflektierten Strahlen.

Die vieleckförmige Prägung weist erfindungsgemäß insoweit ein weiteres neues Merkmal auf, indem sich die bei der vieleckförmigen Prägung ergebenden Kanten bis in den Boden oder Deckel bildenden Abschluss hinein fortsetzen und die Abschlussflächen vorzugsweise bis zu 40 Winkelgrad im Verhältnis zur Waagerechten beziehungsweise der Erstreckung des Grundkörpers geneigt sind. Das führt zu unterschiedlichen Reflexionswinkeln einfallender reflektierter Strahlen.
Es ist dabei unwesentlich, in welcher Gradzahl die Neigung der Bodenflächen ausgeführt wird, wenn die Böden jeweils nebeneinanderliegender vieleckförmiger Prägungen mit unterschiedlicher Neigung ausgeführt sind. Damit vergrößert sich die Zahl unterschiedlicher störender Lichteffekte, sodass ein bei Wildtieren möglicher Gewöhnungseffekt durch gleichartige Wiederholungen gleicher Lichtblitze nahezu ausgeschlossen ist.
Um die Vielfältigkeit unterschiedlicher Spiegelungen zu vergrößern, ist es möglich, die Prägungen im Verhältnis zueinander mit bis zu 60 Winkelgrad zueinander verdreht anzuordnen.
Damit sich in den vieleckförmigen Prägungen nicht Schmutz absetzt, kann der mit nach innen gerichteten Prägungen versehene Reflektor oder der damit versehene Grundkörper nach außen hin vollständig mit einer die Prägungen ausfüllenden im wesentlichen transparenten und den Grundkörper nach außen hin verschließenden Abdeckplatte versehen sein. Diese Abdeckplatte ist vorteilhafterweise so gestaltet, dass sie der Negativform der Prägungen entspricht, um das nichtauszuschließende Auftreten von Kondensat und sich daraus ergebende negative Erscheinungen weitestgehend zu vermeiden.

Die Abdeckplatte weist in der Regel nach außen hin abschließend eine ebene Oberfläche auf und besitzt vorzugsweise nach außen hin einen klaren schmutzabweisenden Belag. Die Abdeckplatte wird mittels üblicher Mittel, die der Stand der Technik bietet, auf dem Grundkörper befestigt.

Es ist ebenso möglich, den Reflektor so auszuführen, dass er auf der dem Grundkörper zugewandten Fläche vieleckförmige Prägungen aufweist, die sich vom Grundkörper weg erstreckend ausgebildet sind. Sind diese verspiegelt, erfolgt das auf der Grundkörper zugewandten Fläche. Die äußere Fläche, die sich auf der vom Grundkörper abgewandten Seite des Reflektors erstreckt, ist glatt ausgeführt, um einerseits einen weitestgehend ungehinderten Lichtein- und -austritt zu ermöglichen, anderseits ein eventuelles Anhaften von Schmutzpartikeln ebenso weitestgehend zu verhindern.

Die Reflektoren auf dem Grundkörper sind infolge dessen vorzugsweise prismatischer Ausbildung in vertikaler Richtung verlaufend so angeordnet, dass sie zum einen die Lichtstrahlen des in einer Richtung laufenden beleuchteten Verkehrs umlenkend und unterbrechend ausgebildet sind und ebenso die Lichtstrahlen des in der gegensätzlichen Richtung verlaufenden beleuchteten Verkehrs erfassend und mit unterschiedlichen Austrittswinkeln den sich der Straße nähernden Wildtieren übermittelnd ausgebildet sind. Dieser Austrittswinkel ändert sich durch die Relativbewegungen eines sich nähernden beleuchteten Fahrzeuges im Verhältnis zur Wildtierwarneinrichtung ständig.
Der Grundkörper kann ebenso nach außen hin eine um eine Achse konvex gekrümmte Außenfläche aufweisen, wobei die Achse parallel zur Längsachse des tragenden Elementes in vertikaler Richtung verlaufend ausgeführt ist. Der Querschnitt des Grundkörpers kann in diesem Falle die Form eines halbelliptischen Körpers in einer abgeflachten Halbkreisform oder die Form eines halbkreisförmigen Körpers aufweisen, wobei die Mittelachse ebenfalls wieder parallel zur Längsachse des tragenden Elements angeordnet in vertikaler Richtung verlaufend ausgeführt ist. Beide Flächen sind vorzugsweise mit hochwirksamer Reflexionsfolie belegt und können transparente als Lichtleiter wirkende Einfassungen im Sinne einer Lichtleiste aufweisen.
Die Vorzugslösung sieht vor, den Grundkörper aus einem transparenten Kunststoff zu fertigen. In diesem Falle wirken die nicht durch Reflektoren abgedeckten Bereiche, das sind insbesondere die Führungen für die Fixierung der Reflektoren, als Lichtleiter im Sinne der Lichtweiterleitung in den nicht bestrahlten Bereich. Die Wirkung wird erhöht, wenn der Kunststoffmasse bei der Herstellung des Grundkörpers fluoreszierende und/ oder phosphoreszierende Partikel beigemischt worden sind.
Es ist ebenso möglich, den Grundkörper so auszuführen, dass er aus einer Kombination der genannten Ausführungsformen besteht, indem der gerundete Teil mit einer mikroprismatischen Folie belegt ist und der in Form eines Prismas ausgeführte Teil die bereits erwähnten Reflektoren mit vieleckförmigen Prägungen aufweist.
Selbstverständlich ist es ebenso möglich, die Kombination verschiedener Formen des Grundkörpers einheitlich mit den erfindungsgemäß vorgeschlagenen vieleckförmigen Prägungen zu versehen. Diese vieleckförmigen Prägungen können ebenso in einer vorbestimmten Vielzahl gruppenweise auf einem gesonderten Teil und mit diesem begrifflich einen Reflektor bildend angeordnet sein, der separat auf dem Grundkörper vorzugsweise lösbar befestigt ist. Ist der Reflektor in einer nahezu einheitlichen Materialstärke hergestellt, weist er im Bereich der konvexen Ausgestaltung beziehungsweise der konkaven Ausgestaltung der vieleckförmigen Erhöhung die gleichmäßige Materialstärke auf. Damit wird das einfallende Licht eines einzelnen Strahles zunächst an der Oberfläche reflektiert. Ein Teil tritt durch den Reflektor hindurch und wird auf der dem Begrenzungspfahl zugewandten jeweils inneren verspiegelten Fläche restlos reflektiert. Damit ergibt sich nicht nur eine Vervielfältigung der einfallenden Strahlen, vielmehr ergibt sich durch den geneigten Abschluss der vieleckförmigen Prägung eine Winkelveränderung des reflektierten austretenden Lichts und damit vorteilhafterweise eine erwünschte Streubreite.
Die Vorzugsversion der Gestaltung des Grundkörpers sieht deshalb vor, dass die prismatische Ausbildung desselben in der Horizontalen und an der im Verhältnis zum Begrenzungspfahl abschließenden Kante Führungen trägt, in die die Reflektoren eingeschoben sind und an der dem Begrenzungspfahl gegenüberliegenden Kante eine lösbare Deckleiste ausgebildet ist, die einerseits ein Herausrutschen der einzelnen Reflektoren verhindert und andererseits ein Auswechseln der Reflektoren ermöglicht. Grundkörper einschließlich angeprägter Führungen sind in einem klaren Kunststoff ausgeführt, der in einer Vorzugsversion ebenfalls leicht bläulich eingefärbt sein kann. Damit die Deckleiste einer Lichtleitung nicht entgegensteht, ist diese zweckmäßigerweise ebenso gleichermaßen lichtdurchlässig ausgeführt.
Der gerundete Teil des Grundkörpers, der erfahrungsgemäß halbelliptisch oder halbkreisförmig ausgeführt ist, kann ebenso lichtdurchlässig die Funktion eines Lichtleiters erfüllend ausgeführt sein.

Auf Grund der erhabenen Ausbildung des Grundkörpers weist dieser von der Rückseite her zugängige Hohlräume auf. Hier bietet es sich an, ein Wildvergrämungsmittel zu deponieren, indem dieses einem Schwamm aufgegeben und dieser auswechselbar im jeweiligen Hohlraum deponiert wird. Die Rückseite des Grundkörpers weist Distanzfortsätze auf, sodass selbst bei normaler senkrechter Befestigung des Grundkörpers an einem Begrenzungspfahl ein Spalt vorhanden ist, der ein Verbreiten des Wildvergrämungsmittels über die Umgebungsluft begünstigt.
Die Länge des Grundkörpers ist vorzugsweise so bemessen, dass er am oberen Ende eines üblichen Begrenzungspfahles, der häufig durch unterschiedliche Farbmarkierungen charakterisiert ist, montiert werden kann.
Eine weitere Version sieht vor, in den Grundkörper Lichtleitkabel mit ihrer Eintrittsfläche so zu deponieren, dass diese mit der Eintrittsfläche in der Hauptrichtung des Lichteintritts liegen. Die Lichtaustrittfläche ist vorzugsweise im rechten Winkel dazu in Richtung möglichen Wildzutritts ausgebildet, sodass ein zusätzlicher Licht-Blitz-Effekt gegeben ist.
Die Befestigung des Grundkörpers an den ihn tragenden Elementen kann ebenfalls über unterschiedliche Distanzstücke erfolgend ausgebildet sein. Das können beispielhaft unterschiedlich lange Hülsen sein. Damit lässt sich der Grundkörper im Verhältnis zum tragenden Element auf die Senkrechte eingestellt befestigen und/oder einer aus einer Geländeneigung resultierenden Veränderung anpassen.
Die erfindungsgemäße Wildtierwarneinrichtung kann ebenso mit ihrem Grundkörper untrennbarer Bestandteil des tragenden Elements sein, indem beide bereits herstellungsseitig eine untrennbare Einheit bilden.

Auf die Wildtierwarneinrichtung kann äußerlich sichtbar aufmerksam gemacht werden, indem vorzugsweise das den Grundkörper tragende Element eine äußerlich sichtbare Kennzeichnung aufweist, vorzugsweise in einer festgelegten Warnfarbe. Das kann eine farbige Kunststoffkappe oder ebenfalls eine blinkende autark gespeiste LED oder dergleichen sein. Zum einen erfährt dadurch der Fahrzeugführer, dass eine Wildtiere warnende Einrichtung hoher Funktionalität vorhanden ist, zum anderen, dass u. U. Wildtierwechsel nicht auszuschließen ist.

Nach bisherigen Erfahrungen ist durch die erfindungsgemäße Ausbildung der bienenwabenförmigen verspiegelten Prägungen unterschiedlicher Farbe im Grundkörper eine Wildtiere außerordentlich störende wechselnde Lichtreflexion vorhanden, die durch die Bewegungen eines beleuchteten Fahrzeugs in sich kaum wiederholender Weise hervorgerufen wird, ein Gewöhnungseffekt nicht eintritt und Wildtiere infolgedessen erfolgreich davon abgehalten werden, die Straße in einem ungünstigen Augenblick zu überqueren. Dabei genießt der Einsatz fluoreszierender Zusätze den Vorzug vor phosphoreszierenden Mitteln, da bei phosphoreszierenden Mitteln ein relatives sich sukzessive abschwächendes Dauerleuchten gegeben ist und ein Gewöhnungseffekt bei Wildtieren eintreten kann, der bei fluoreszierenden Mitteln nicht gegeben ist. Über den gerundeten Teil des Grundkörpers und die darauf angeordnete hochwirksame Reflexionsfolie wird auf der dem zu erwartenden Wild zugewandten Schattenseite ein Bereich von etwa 160 Winkelgrad erfasst, durch den prismatischen mit Reflektoren besetzten Teil des Grundkörpers werden etwa 120 Winkelgrad erfasst, durch die integrierte Lichtleitfunktion der Vorzugsvariante wiederum etwa 170 Winkelgrad und ein eventuell integriertes Wildvergrämungsmittel wirkt auf 360 Winkelgrad, bezogen auf das Umfeld der Wildtierwarneinrichtung.

Mit Hilfe der erfindungsgemäßen Wildtierwarneinrichtung mit ihrem hohen Wirkungsradius und der hohen Wirkweise werden zum einen die Lichtstrahlen des in einer Richtung laufenden beleuchteten Verkehrs umgelenkt und ebenso, auch gleichzeitig, die Lichtstrahlen des in der gegensätzlichen Richtung verlaufenden beleuchteten Verkehrs erfasst und mit unterschiedlichen Austrittswinkeln den sich der Straße nähernden Wildtieren übermittelt. Auf Grund der Eigenart der Konstruktion ist selbst bei geringsten Winkeländerungen einer sich nähernden Lichtquelle ein durchgängiges sich ständig veränderndes Lichtfeld in einem sich ständig verändernden Wirkradius gegeben. Die vorgeschlagene Wildtierwarneinrichtung ist durch eine einfache Montage und niedrige Betriebskosten gekennzeichnet. Andere Verkehrsteilnehmer werden nicht geblendet.

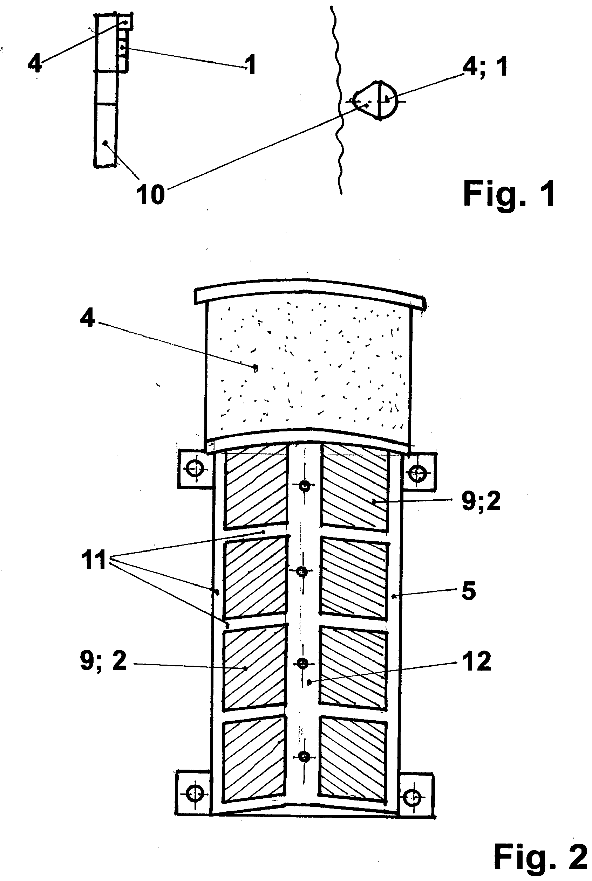

Die Erfindung soll nachstehend an einem Ausführungsbeispiel näher erläutert werden.
In der zugehörigen Zeichnung zeigt
- Fig. 1: einen Begrenzungspfahl für einen Verkehrsweg als tragendes Element mit einem an ihm befestigten prismatischen Grundkörper, der mit einem halbkreisförmigen Teil kombiniert ist, in der Seitenansicht und in der Draufsicht,
- Fig. 2: einen Grundkörper, dessen prismatischer Teil mit einem halbkreisförmigen Körper kombiniert ist, in der zu erwartenden Wildtieren zugewandten Ansicht,

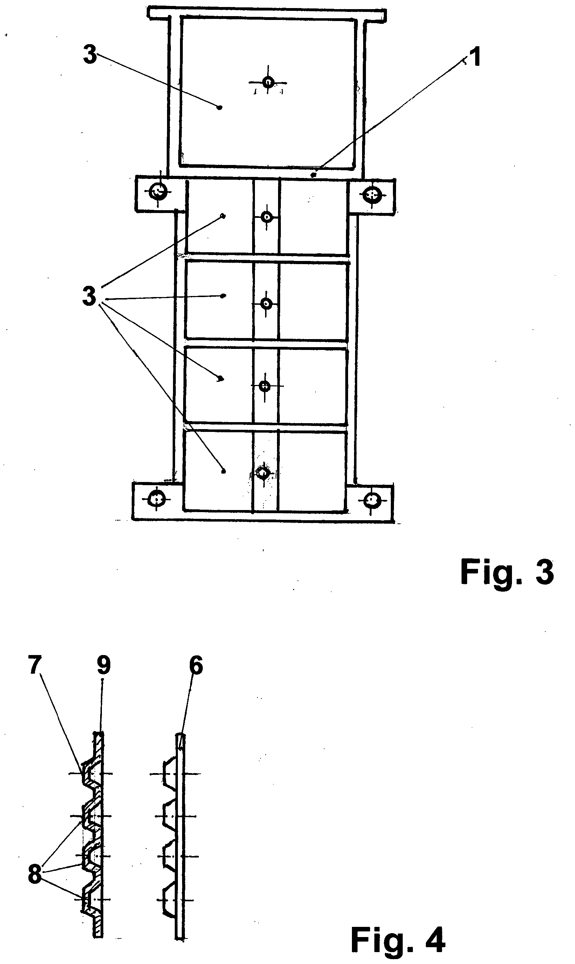

- Fig. 3: einen Grundkörper, dessen prismatischer Teil mit einem halbkreisförmigen Körper kombiniert ist, in der rückwärtigen dem tragenden Element zugewandten Ansicht,
- Fig. 4: den Schnitt durch einen Reflektor, dessen Prägungen so angeordnet sind, dass sie auf das Innere des erhabenen Grundkörpers gerichtet und dem Grundkörper zugewandt der Abschluss des Hohlraumes dem Grundkörper gegenüber durch den als Boden wirkenden Abschluss im Sinne einer konkaven Wirkung der Gesamtanordnung erzielend gegeben ist mit zugehöriger Abdeckplatte,

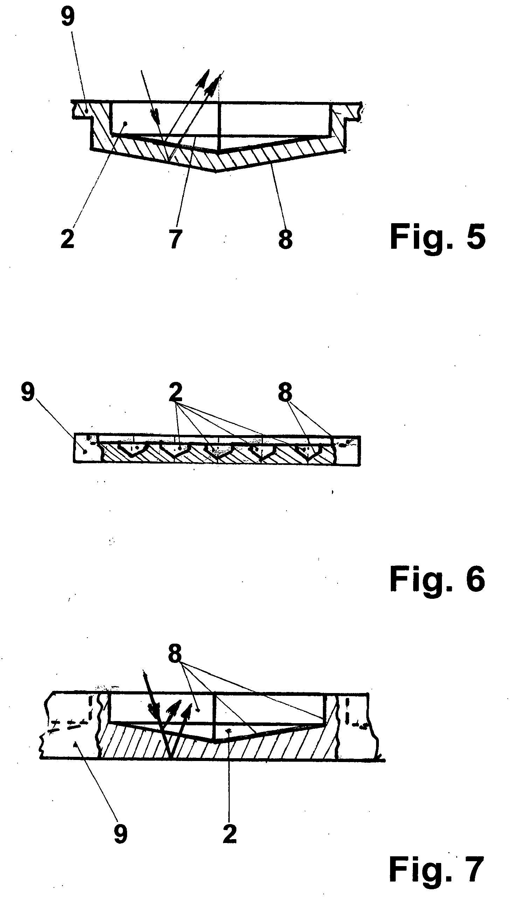

- Fig. 5: den Schnitt durch eine bienenwabenförmige Prägung eines Reflektors einschließlich punktueller Darstellung der Lichtreflexion gemäß der Ausführung nach Fig. 4,
- Fig. 6: den Schnitt durch einen Reflektor, dessen Prägungen auf das Innere des erhabenen Grundkörpers gerichtet und bei jeder Prägung an dem dem Grundkörper gegenüberliegenden Ende die Begrenzung des Hohlraumes nach außen hin durch den als Boden wirkenden Abschluss im Sinne einer konvexen Wirkung der Gesamtanordnung erzielend gegeben ist,
- Fig. 7: den Schnitt durch eine bienenwabenförmige Prägung eines Reflektors einschließlich punktueller Darstellung der Lichtreflexion gemäß der Ausführung nach Fig. 6.

### I.

Eine erfindungsgemäße Wildtierwarneinrichtung weist zunächst einen Grundkörper 1 auf, der in seinem unteren Teil als Prisma 5 ausgeführt ist und mit Reflektoren 9 mit beispielhaft bienenwabenförmigen Prägungen 2 versehen ist. Des Weiteren ist das Prisma 5 mit einem bezogen auf die Vertikale halbkreisförmigen Körper 4 kombiniert und bildet als Pressteil mit diesem eine Einheit als Grundkörper 1. Durch die erhabene Ausbildung des Grundkörpers 1 sind rückwärtig offene Aussparungen 3 vorhanden. Beispielhaft ist die im halbkreisförmigen Körper 4 befindliche Aussparung 3 mit einem Schwamm, der als Formstück ausgebildet ist, gefüllt, wobei der Schwamm mit einem Wildvergrämungsmittel getränkt ist. Um einen Gewöhnungseffekt bei Wildtieren nicht eintreten zu lassen, ist es vorteilhaft, dieses Wildvergrämungsmittel, bezogen auf auf dem Markt angebotene gängige Sorten, turnusmäßig zu wechseln.

Damit sich die bienenwabenförmigen Prägungen 2, die nach außen hin offen sind, durch Verschmutzung nicht zusetzen, ist, bezogen auf die äußeren Dimensionen des Reflektors 9, eine Abdeckplatte 6 identischer Abmessung vorhanden. Diese kann aufgeschraubt oder unverlierbar geklemmt sein und schafft bei Beibehaltung der Funktion der bienenwabenförmigen Prägungen 2 eine maschinell reinigungsfähige Oberfläche. Vorzugsweise ist diese Abdeckplatte 6 vor dem Aufbringen auf den Reflektor 9 auf der dem Grundkörper 1 abgewandten Fläche mit einem schmutzabweisenden Mittel versehen. Das kann beispielsweise ein silikonhaltiger klarer Anstrich sein.

Die bienenwabenförmigen Prägungen 2 sind nach unten hin, also der Mittelachse des tragenden Elements 10 zugewandt, mit einem den Boden bildenden Abschluss 7 ausgeführt. Die bienenwabenförmigen Prägungen 2 sind auf der dem tragenden Element 10 zugewandten äußeren Fläche komplett verspiegelt, um einfallendes Licht zu reflektieren. Des Weiteren sind die Verspiegelungen 8 unterschiedlicher Reflektoren 9 in unterschiedlichen Farben ausgeführt. Als Farben sind solche gewählt, die zum von Wildtieren wahrnehmbaren Farbspektrum gehören und denen Wildtiere besondere Aufmerksamkeit zukommen lässt. Nach bisheriger Erkenntnis sind das Blau-, Gelb- und/oder Grüntöne beziehungsweise Mischungen daraus, beispielsweise oliv und türkis.
Die Kanten des von der Wabenform gebildeten Sechsecks in Form der Prägung 2 setzen sich bis in den als Boden dienenden Abschluss 7 hinein fort. Des Weiteren ist der Abschluss 7 in einem Winkel von bis zu 40 Winkelgrad, vorzugsweise 20 Winkelgrad gegenüber der Waagerechten geneigt, um somit unterschiedliche Spiegelungen und ebenso unterschiedliche Reflexionsrichtungen einfallenden Lichts zu gewährleisten.
Die Neigung des als Boden dienenden Abschlusses 7 ist von einer bienenwabenförmigen Prägung 2 zu einer anderen bienenwabenförmigen Prägung 2 unterschiedlich. Das Maß der Tiefe der bienenwabenförmigen Prägungen 2 ist grundsätzlich funktionell bedeutungslos und wird letztlich durch den Neigungsgrad des als Boden dienenden Abschlusses 7 bestimmt.
Auf den beiden Flächen des prismatischen Teils des Grundkörpers 1 sind auf seinen beiden freien Seiten je vier Reflektoren 9 als Gruppierungen der beispielhaft bienenwabenförmigen Prägungen 2 ausgebildet, die von Reflektor 9 zu Reflektor 9 in unterschiedlichen Farben verspiegelt sind. Prismatischer Grundkörper 1 und Reflektoren 9 können eine Einheit bilden, sie können aber auch, wie in den Figuren dargestellt, getrennt konzipiert und gefertigt und vorzugsweise lösbar miteinander verbunden sein.
Bei der Annahme, dass jeder Reflektor 9 eine Zahl von 25 sechseckigen bienenwabenförmigen Prägungen 2 mit je 7 reflektierenden Flächen aufweist, können bei einem einzigen Reflektor bei der vorgeschlagenen erfindungsgemäßen Gestaltung mindestens 175 Lichtreflexionen entstehen, die sich farblich auch noch unterscheiden können. Bei 8 Reflektoren sind das mindestens 1400 Lichtreflexionen.

Beispielhaft ist der Grundkörper 1 so konzipiert, dass er aus transparentem Kunststoff bestehend ausgeführt ist, sodass dieser bei Lichteinfall mit seinen nach außen tretenden Teilen als Lichtleiter wirkt. Vorzugsweise sind seiner Ausgangspressmasse fluoreszierende Partikel, vorzugsweise Nanopartikel beigefügt, um die Wirkung der als Lichtleiter wirkenden Teile des Grundkörpers 1 zu erhöhen. Die prismatische Ausbildung des Grundkörpers 1 trägt in der Horizontalen und an der im Verhältnis zum Begrenzungspfahl abschließenden Kante vertikale Führungen 11, in die beispielhaft je 4 verschiedenfarbige Reflektoren 9 eingeschoben sind und die an der dem tragenden Element 10 gegenüberliegenden Kante des prismatischen Teiles des Grundkörpers 1 durch eine lösbare Deckleiste 12 auf bekannte Art und Weise fixiert sind, sodass einerseits ein Herausrutschen der einzelnen Reflektoren 9 aus den Führungen 11 verhindert und andererseits bei Bedarf ein Auswechseln der Reflektoren 9 ermöglicht ist. Damit Führungen 11 und Abschlussleiste 12 einer wirksamen Lichtleitung zur Schattenseite hin nicht entgegenstehen, sind diese beispielhaft zweckmäßigerweise ebenso wie der Grundkörper 1 glasklar mit vorzugsweise eingelagerten fluoreszierenden Nanopartikeln ausgeführt.

Üblicherweise besitzt der Grundkörper 1 Befestigungspunkte zur Befestigung an tragenden Elementen 10 in Form von in der Regel Straßenbegrenzungspfählen oder anderen tragenden Elementen 10, beispielsweise an einer Hauswand. Um gegebenenfalls vorhandene Schiefstellungen des tragenden Elements 10 auszugleichen, kann der Einsatz unterschiedlich langer Distanzhülsen im Zusammenhang mit der Befestigung vorteilhaft sein.

In den Grundkörper 1 können ebenso Lichtleiter in Form von Kabeln oder anderen Profilen integriert sein, indem diese mit ihrer Lichteintrittsfläche in Abhängigkeit von der Richtung des zu erwartenden Lichteintritts in und in Richtung des erwünschten Lichtaustritts im Grundkörper 1 und / oder im Reflektor 9 fixiert sind.

Wie bereits beschrieben, kann der Grundkörper 1 zum einen so ausgebildet sein, dass er lösbar, beispielsweise durch Schrauben oder Rasten, am tragenden Element 10 befestigt ist. Er kann aber ebenso als integrativer Bestandteil des als Straßenbegrenzungspfahles tragenden Elements 10 ausgebildet sein.

Das den Grundkörper 1 tragende Element 10 kann ebenfalls eine äußerlich sichtbare Kennzeichnung aufweisen. Diese Kennzeichnung kann beispielsweise eine der äußeren Form des tragenden Elements 10 angepasste klemmende Kappe sein, ein übergezogener farbiger Ring oder gar eine LED mit autarker solargespeister Energiequelle.

### II.

Eine weitere Version der erfindungsgemäßen Einrichtung ist dadurch gekennzeichnet, dass der Reflektor 9 auf seiner dem tragenden Element 10 zugewandten Seite vieleckförmige Prägungen aufweist, die im Sinne einer konvexen Wirkung sich von dem tragenden Element 10 hinweg erstrecken. In diesem Falle ist die den Prägungen 2 gegenüberliegende nach außen abschließende Fläche durchgängig eben und glatt ausgeführt, um Schmutzanhaftungen entgegen zu wirken. Die Verspiegelung 8 ist in diesem Fall auf der dem tragenden Element 10 zugewandten Seite aufgebracht.

**Bezugszeichen:**

| | |
|---|---|
| Grundkörper | 1 |
| Prägungen | 2 |
| Aussparung | 3 |
| Körper | 4 |
| Prisma | 5 |
| Abdeckplatte | 6 |
| Abschluss | 7 |
| Verspiegelung | 8 |
| Reflektor | 9 |
| tragendes Element | 10 |
| Führungen | 11 |
| Deckleiste | 12 |

## Patentansprüche

1. Wildtierwarneinrichtung, bei der auf einem erhabenen Grundkörper (1) Reflektoren (9) ausgebildet sind, über diese Reflektoren (9) von einem beleuchteten sich bewegenden Fahrzeug Lichtstrahlen in der vermuteten Richtung kommender Wildtiere gelenkt werden und der Grundkörper (1) Befestigungspunkte zu seiner Befestigung an ihn tragenden Elementen (10) wie Begrenzungspfählen und dergleichen besitzend gestaltet ist, **dadurch gekennzeichnet, dass** der erhabene Grundkörper (1) transparent und in vertikaler Richtung verlaufend ausgeführt ist und auf seiner Rückseite Aussparungen (3) aufweist sowie mit seiner Längsachse parallel zum tragenden Element (10) angeordnet ist und die Reflektoren (9) vieleckförmige Prägungen (2) aufweisen, die Prägungen (2) in unterschiedlichen Farben ausgeführt sind, jede einzelne Prägung (2) einen zugehörigen Abschluss (7) aufweisend gestaltet ist und somit als einseitig geschlossener Hohlraum ausgebildet ist sowie die Rückseite der Reflektoren (9) verspiegelt ist und diese Verspiegelung (8) ebenso in unterschiedlichen Farben ausgeführt ist, wobei die unterschiedlichen Farben der Prägungen (2) und der Verspiegelung (8) solche sind, die vom Wild als grell bis sehr grell empfunden werden.

2. Wildtierwarneinrichtung nach Anspruch 1, **dadurch gekennzeichnet, dass** die vieleckförmigen Prägungen (2) in bienenwabenförmiger Anordnung ausgeführt sind.

3. Wildtierwarneinrichtung nach Anspruch 1 oder 2, **dadurch gekennzeichnet, dass** die Prägungen (2) auf das Innere des erhabenen Grundkörpers (1) gerichtet und dem Grundkörper (1) zugewandt der Abschluss (7) des Hohlraumes dem Grundkörper (1) gegenüber durch den als Boden wirkenden Abschluss (7) im Sinne einer konkaven Wirkung der Gesamtanordnung erzielend gegeben ist.

4. Wildtierwarneinrichtung nach Anspruch 1 oder 2, **dadurch gekennzeichnet, dass** die Prägungen (2) auf das Innere des erhabenen Grundkörpers (1) gerichtet und bei jeder Prägung (2) an dem dem Grundkörper (1) gegenüberliegenden Ende die Begrenzung des Hohlraumes nach außen hin durch den als Boden wirkenden Abschluss (7) im Sinne einer konvexen Wirkung der Gesamtanordnung erzielend gegeben ist.

5. Wildtierwarneinrichtung nach einem der Ansprüche 1 bis 4, **dadurch gekennzeichnet, dass** die sich durch die vieleckförmige Ausbildung der Prägungen (2) ergebenden Kanten bis in den Abschluss (7) der jeweiligen Prägung (2) hinein fortsetzen und der Abschluss (7) bezogen auf die Waagerechte von seinem Mittelpunkt ausgehend in einem Winkelbereich von bis zu 40 Winkelgrad geneigt ausgeführt ist.

6. Wildtierwarneinrichtung nach Anspruch 5, **dadurch gekennzeichnet, dass** die Neigung der einzelnen Flächen des Abschlusses (7) der vieleckförmigen Prägungen (2) einer jeden einen Reflektor (9) bildenden Gruppierung im Vergleich miteinander unterschiedlich ausgeführt ist.

7. Wildtierwarneinrichtung nach einem der Ansprüche 1 bis 6, **dadurch gekennzeichnet, dass** die vieleckförmigen Prägungen (2), die mit ihrem Abschluss (7) dem Grundkörper (1) zugewandt angeordnet sind, vollständig mit einer die Prägungen (2) ausfüllenden im wesentlichen transparentem und den von den Prägungen (2) gebildeten Reflektor (9) nach außen hin verschließenden Abdeckplatte (6) versehen sind und die Abdeckplatte (6) deren Form nach außen hin dem Grundkörper (1) abgewandt abschließend eine ebene Oberfläche aufweist.

8. Wildtierwarneinrichtung nach Anspruch 7, **dadurch gekennzeichnet, dass** die Abdeckplatte (6) nach außen hin einen klaren schmutzabweisenden Belag aufweist.

9. Wildtierwarneinrichtung nach Anspruch 4, **dadurch gekennzeichnet, dass** die vieleckförmigen Prägungen (2) mit konvexer Wirkung am Ende des Abschlusses (7) des entstandenen Hohlraumes und nach außen hin dem Grundkörper (1) gegenüberliegend auf der abschließenden Fläche einen schmutzabweisenden Belag aufweisen.

10. Wildtierwarneinrichtung nach einem der Ansprüche 1 bis 9, **dadurch gekennzeichnet, dass** der Grundkörper (1) in Form eines Prismas (5) ausgeführt ist.

11. Wildtierwarneinrichtung nach einem der Ansprüche 1 bis 9, **dadurch gekennzeichnet, dass** der Grundkörper (1) eine um eine Achse konvex gekrümmte Außenfläche aufweist und die Achse parallel zur Längsachse des Grundkörpers (1) verlaufend ausgeführt ist.

12. Wildtierwarneinrichtung nach den Ansprüchen 10 und 11, **dadurch gekennzeichnet, dass** ein Teil des Grundkörpers (1) in Form eines Prismas (5) und der andere Teil des Grundkörpers (1) in Form eines Körpers (4) mit einer um eine Achse konvex gekrümmten Außenfläche ausgeführt und die Achse parallel zur Längsachse des Grundkörpers (1) verlaufend ausgeführt ist.

13. Wildtierwarneinrichtung nach Anspruch 12, **dadurch gekennzeichnet, dass** der Grundkörper (1) in Form eines Prismas (5) mit Reflektoren (9) besetzt ist, die vieleckförmige Prägungen (2) aufweisen und der Körper (4) mit einer um eine Achse konvex gekrümmten Außenfläche als Teil des Grundkörpers (1) mit einer mikroprismatischen Reflexfolie überzogen ist.

14. Wildtierwarneinrichtung nach einem der Ansprüche 1 bis 13, bei der die Struktur des Grundkörpers (1) vor ihrer Abformung und Aushärtung mit fluoreszierenden Partikeln versetzt worden ist.

15. Wildtierwarneinrichtung nach einem der Ansprüche 1 bis 14, **dadurch gekennzeichnet, dass** die Verspiegelung (8) mit fluoreszierenden Nanopartikeln versetzt ist.

16. Wildtierwarneinrichtung nach einem der Ansprüche 1 bis 15, **dadurch gekennzeichnet, dass** der Aussparungen (3) aufweisende Teil des Grundkörpers (1) auf seiner freien Rückseite mindestens teilweise ein Wildvergrämungsmittel tragend ausgebildet ist.

17. Wildtierwarneinrichtung nach einem der Ansprüche 1 bis 16, **dadurch gekennzeichnet, dass** in die Lichteintritts- und/oder -austrittsflächen der Reflektoren (9) bildenden Gruppierung von Prägungen (2) diese Reflektoren (9) untereinander verbindende Lichleiter integriert sind.

18. Wildtierwarneinrichtung nach einem der Ansprüche 1 bis 17, **dadurch gekennzeichnet, dass** der prismatische Teil des Grundkörpers (1) auf seiner Rückseite in seinen Randzonen Führungen (11) zur Aufnahme und Fixierung von Reflektoren (9) aufweist und auf der den Grundkörper (1) abschließenden gegenüberliegenden Kante eine auf bekannte Art und Weise lösbare Deckleiste (12) ausgebildet ist sowie Führungen (11) und Deckleiste (12) transparent wie der Grundkörper (1) ausgeführt sind.

19. Wildtierwarneinrichtung nach einem der Ansprüche 13 bis 18, **dadurch gekennzeichnet, dass** der eine mikroprismatischen Reflexfolie tragende Körper (4) des Grundkörpers (1) transparent wie der Grundkörper (1) ausgeführt und von mit dem Grundkörper (1) verbundenen Lichtleisten eingefasst ist.

## Claims

1. Wild animal warning device, in which reflectors (9) are formed on an elevated base (1), light beams from an illuminated moving vehicle are deflected via these reflectors (9) in the suspected direction of coming wild animals, and the base (1) is configured so as to have fixing points for its fixing to elements (10) carrying the same, such as boundary posts and the like, **characterized in that** the elevated base (1) is transparent and designed to extend in the vertical direction and, on its rear side, has recesses (3) and is arranged with its longitudinal axis parallel to the carrying element (10), and the reflectors (9) have polygonal embossments (2), the embossments (2) are designed with various colours, each individual embossment (2) is configured so as to have an associated closure (7) and is thus formed as a cavity closed on one side, and the rear side of the reflectors (9) is mirrored and this mirroring (8) is likewise designed with different colours, wherein the different colours of the embossments (2) and the mirroring (8) are those that are felt by the wild animals to be glaring or very glaring.

2. Wild animal warning device according to Claim 1, **characterized in that** the polygonal embossments (2) are designed in a honeycomb arrangement.

3. Wild animal warning device according to Claim 1 or 2, **characterized in that** the embossments (2) oriented towards the interior of the elevated base (1) and the closure (7) of the cavity facing the base (1) and opposite the base (1) achieve the effect of a concave action of the overall arrangement by the closure (7) acting as a bottom.

4. Wild animal warning device according to Claim 1 or 2, **characterized in that** the embossments (2) oriented towards the interior of the elevated base (1) and, in each embossment (2), at the end opposite the base (1), the delimitation of the cavity on the outside by the closure (7) acting as a bottom achieves the effect of a convex action of the overall arrangement.

5. Wild animal warning device according to one of Claims 1 to 4, **characterized in that** the edges resulting from the polygonal formation of the embossments (2) continue as far as the closure (7) of the respective embossment (2) and, in relation to the horizontal originating from its centre, the closure (7) is designed to be inclined in an angular range of up to 40 degrees of arc.

6. Wild animal warning device according to Claim 5, **characterized in that** the inclination of the individual faces of the closure (7) of the polygonal embossments (2) of each grouping forming a reflector (9) is designed to be different as compared with one another.

7. Wild animal warning device according to one of Claims 1 to 6, **characterized in that** the polygonal embossments (2) which are arranged with their closure (7) facing the base (1) are completely provided with a substantially transparent covering plate (6) filling the embossments (2) and closing the reflector (9) formed by the embossments (2) on the outside, and the covering plate (6) has a flat surface closing its shape on the outside and facing away from the base (1).

8. Wild animal warning device according to Claim 7, **characterized in that** the covering plate (6) has a clear dirt-repellent covering on the outside.

9. Wild animal warning device according to Claim 4, **characterized in that** the polygonal embossments (2) having a convex action at the end of the closure (7) of the cavity that is produced and opposite the base (1) on the outside have a dirt-repellent covering on the closing face.

10. Wild animal warning device according to one of Claims 1 to 9, **characterized in that** the base (1) is designed in the form of a prism (5).

11. Wild animal warning device according to one of Claims 1 to 9, **characterized in that** the base (1) has an outer surface curved convexly about an axis, and the axis is designed to extend parallel to the longitudinal axis of the base (1).

12. Wild animal warning device according to Claims 10 and 11, **characterized in that** part of the base (1) is designed in the form of a prism (5), and the other part of the base (1) is designed in the form of a body (4) with an outer surface curved convexly about an axis, and the axis is designed to extend parallel to the longitudinal axis of the base (1).

13. Wild animal warning device according to Claim 12, **characterized in that** the base (1) in the form of a prism (5) is fitted with reflectors (9) which have polygonal embossments (2), and the body (4) having an outer surface curved convexly about an axis as part of the base (1) is covered with a micro-prismatic reflective film.

14. Wild animal warning device according to one of Claims 1 to 13, in which the structure of the base (1) has had fluorescent particles mixed therewith before its moulding and hardening.

15. Wild animal warning device according to one of Claims 1 to 14, **characterized in that** the mirroring (8) has fluorescent nanoparticles mixed therewith.

16. Wild animal warning device according to one of Claims 1 to 15, **characterized in that** the part of the base (1) having the recesses (3) is at least partly designed to carry a wild animal repellent agent on its clear rear side.

17. Wild animal warning device according to one of Claims 1 to 16, **characterized in that** optical fibres connecting the reflectors (9) to one another are integrated into the grouping of embossments (2) forming the light entry and/or exit surfaces of these reflectors (9).

18. Wild animal warning device according to one of Claims 1 to 17, **characterized in that** the prismatic part of the base (1) has guides (11) for holding and fixing reflectors (9) in its edge zones on its rear side and, a detachable cover strip (12) that can be detached in a known way is formed on the opposite edge closing the base (1), and guides (11) and cover strip (12) are designed to be transparent, like the base (1).

19. Wild animal warning device according to one of Claims 13 to 18, **characterized in that** the body (4) of the base (1) that carries a micro-prismatic reflective film is designed to be transparent like the base (1), and is bordered by light strips connected to the base (1).

## Revendications

1. Dispositif d'avertissement contre les animaux sauvages, dans lequel des réflecteurs (9) sont formés sur un corps de base surélevé (1), des rayons lumineux provenant d'un véhicule éclairé en mouvement sont déviés par ces réflecteurs (9) dans la direction présumée d'animaux errants et le corps de base (1) présente des points de fixation pour sa fixation à des éléments (10) qui le portent, comme des piquets de clôture et analogues, **caractérisé en ce que** le corps de base surélevé (1) est transparent et s'étend en direction verticale et présente des découpes (3) sur son côté arrière et est disposé avec son axe longitudinal parallèle à l'élément porteur (10) et les réflecteurs (9) présentent des empreintes polygonales (2), les empreintes (2) sont réalisées en différentes couleurs, chaque empreinte individuelle (2) présente une extrémité correspondante (7) et est ainsi réalisée en forme de cavité fermée d'un côté et le côté arrière des réflecteurs (9) est doté d'une couche réfléchissante et cette couche réfléchissante (8) est réalisée également en différentes couleurs, dans lequel les différentes couleurs des empreintes (2) et de la couche réfléchissante (8) sont de nature à être perçues comme aveuglantes à très aveuglantes par les animaux sauvages.

2. Dispositif d'avertissement contre les animaux sauvages selon la revendication 1, **caractérisé en ce que** les empreintes polygonales (2) sont réalisées selon un agencement en nid d'abeilles.

3. Dispositif d'avertissement contre les animaux sauvages selon la revendication 1 ou 2, **caractérisé en ce que** l'extrémité (7) de la cavité est située en face du corps de base (1) en produisant les empreintes (2) dirigées vers l'intérieur du corps de base surélevé (1) et tournées vers le corps de base (1) par l'extrémité (7) faisant office de fond dans le sens d'un effet concave de l'agencement d'ensemble.

4. Dispositif d'avertissement contre les animaux sauvages selon la revendication 1 ou 2, **caractérisé en ce que** les empreintes (2) sont dirigées vers l'intérieur du corps de base surélevé (1) et à chaque empreinte (2) à l'extrémité opposée au corps de base (1) la limite de la cavité vers l'extérieur est donnée par l'extrémité (7) faisant office de fond dans le sens d'un effet convexe de l'agencement d'ensemble.

5. Dispositif d'avertissement contre les animaux sauvages selon l'une quelconque des revendications 1 à 4, **caractérisé en ce que** les arêtes résultant de la configuration polygonale des empreintes (2) se prolongent jusque dans l'extrémité (7) de l'empreinte respective (2) et l'extrémité (7) est réalisée avec une plage de déclivité pouvant atteindre 40 degrés d'angle par rapport à l'horizontale à partir de son point central.

6. Dispositif d'avertissement contre les animaux sauvages selon la revendication 5, **caractérisé en ce que** l'inclinaison des faces individuelles de l'extrémité (7) des empreintes polygonales (2) de chaque groupe formant un réflecteur (9) est réalisée de façon différente l'une par rapport à l'autre.

7. Dispositif d'avertissement contre les animaux sauvages selon l'une quelconque des revendications 1 à 6, **caractérisé en ce que** les empreintes polygonales (2), qui sont disposées avec leur extrémité (7) tournée vers le corps de base (1), sont munies entièrement d'une plaque de recouvrement (6) essentiellement transparente, remplissant les empreintes (2) et fermant vers l'extérieur le réflecteur (9) formé par les empreintes (2) et la plaque de recouvrement (6) dont la forme présente vers l'extérieur une surface plane terminale à l'opposé du corps de base (1).

8. Dispositif d'avertissement contre les animaux sauvages selon la revendication 7, **caractérisé en ce que** la plaque de recouvrement (6) présente en direction de l'extérieur un revêtement transparent anti-salissures.

9. Dispositif d'avertissement contre les animaux sauvages selon la revendication 4, **caractérisé en ce que** les empreintes polygonales (2) avec un effet convexe à la fin de l'extrémité (7) de la cavité formée et à l'opposé du corps de base (1) en direction de l'extérieur présentent sur la face terminale un revêtement anti-salissures.

10. Dispositif d'avertissement contre les animaux sauvages selon l'une quelconque des revendications 1 à 9, **caractérisé en ce que** le corps de base (1) est réalisé sous la forme d'un prisme (5).

11. Dispositif d'avertissement contre les animaux sauvages selon l'une quelconque des revendications 1 à 9, **caractérisé en ce que** le corps de base (1) présente une face extérieure incurvée de façon convexe autour d'un axe et l'axe s'étend parallèlement à l'axe longitudinal du corps de base (1).

12. Dispositif d'avertissement contre les animaux sauvages selon les revendications 10 et 11, **caractérisé en ce qu'**une partie du corps de base (1) est réalisée sous la forme d'un prisme (5) et l'autre partie du corps de base (1) est réalisée sous la forme d'un corps (4) avec une face extérieure incurvée de façon convexe autour d'un axe et l'axe s'étend parallèlement à l'axe longitudinal du corps de base (1).

13. Dispositif d'avertissement contre les animaux sauvages selon la revendication 12, **caractérisé en ce que** le corps de base (1) en forme de prisme (5) est muni de réflecteurs (9), qui présentent des empreintes polygonales (2) et le corps (4) avec une face extérieure incurvée de façon convexe autour d'un axe en tant que partie du corps de base (1) est revêtue avec une feuille réfléchissante microprismatique.

14. Dispositif d'avertissement contre les animaux sauvages selon l'une quelconque des revendications 1 à 13, dans lequel la structure du corps de base (1) a été dotée de particules fluorescentes avant son démoulage et son durcissement.

15. Dispositif d'avertissement contre les animaux sauvages selon l'une quelconque des revendications 1 à 14, **caractérisé en ce que** la couche réfléchissante (8) est dotée de nanoparticules fluorescentes.

16. Dispositif d'avertissement contre les animaux sauvages selon l'une quelconque des revendications 1 à 15, **caractérisé en ce que** la partie du corps de base (1) présentant des découpes (3) porte sur son côté arrière libre au moins partiellement un moyen d'effarouchement des animaux sauvages.

17. Dispositif d'avertissement contre les animaux sauvages selon l'une quelconque des revendications 1 à 16, **caractérisé en ce que** des guides de lumière reliant ces réflecteurs (9) entre eux sont intégrés dans le groupe d'empreintes (2) formant des faces d'entrée et/ou de sortie de la lumière des réflecteurs (9).

18. Dispositif d'avertissement contre les animaux sauvages selon l'une quelconque des revendications 1 à 17, **caractérisé en ce que** la partie prismatique du corps de base (1) présente sur son côté arrière dans ses zones de bord des guides (11) destinés à recevoir et à fixer des réflecteurs (9) et une latte de recouvrement (12) amovible de façon connue est formée sur l'arête opposée terminant le corps de base (1) et des guides (11) et la latte de recouvrement (12) sont transparents comme le corps de base (1).

19. Dispositif d'avertissement contre les animaux sauvages selon l'une quelconque des revendications 13 à 18, **caractérisé en ce que** le corps (4) du corps de base (1) portant une feuille réfléchissante microprismatique est transparent comme le corps de base (1) et est encadré par des lattes lumineuses assemblées au corps de base (1).
